# EUROPEAN PATENT SPECIFICATION

(11) **EP 3 513 026 B1**
(45) Date of publication and mention of the grant of the patent: **11.11.2020**
(21) Application number: 17787037.5
(22) Date of filing: 18.09.2017
(51) Int. Cl.: E06B 9/24, E06B 9/264, A01G 9/22, G02B 26/08

(54) **STRIP ASSEMBLY, STRIP SYSTEM, INSULATED GLAZING AND METHOD**
STREIFENANORDNUNG, STREIFENSYSTEM, ISOLIERVERGLASUNG UND VERFAHREN
ENSEMBLE DE BANDES, SYSTÈME DE BANDE, VITRAGE ISOLANT ET PROCÉDÉ

(30) Priority: 16.09.2016 NL 2017478
(43) Date of publication of application: 24.07.2019
(73) Proprietor: ES Blinds B.V., 5612 AB Eindhoven (NL)
(72) Inventor: VAN KAMPEN, Engel Adrianus, 3114 VS Zuidland (NL); VERBEEK, Hemannus Johannes Maria, 5731 WJ Mierlo (NL); VANDEPOEL, Roald Richard Josephus, 7211 LW Eefde (NL); VAN DER LINDEN, Marius Leonardus Robertus, 2652 KM Berkel en Rodenrijs (NL)
(74) Representative: Algemeen Octrooi- en Merkenbureau B.V.
(86) International application number: PCT/NL2017/050613
(87) International publication number: WO 2018/052299

(56) References cited:
- WO-A1-2008/041848
- US-A- 5 850 861
- US-B2- 8 024 891

## Description

The present invention relates to a strip assembly and to a strip system and insulated glazing comprising such assembly. The invention further relates to a method for manufacturing a strip assembly.

A strip assembly, as defined in the preamble of claim 1 and shown in figure 1, is known from WO2008/041848. It comprises a first translucent substrate comprising a first glass body 1, a second translucent substrate comprising a second glass body 3 and arranged spaced apart from first substrate 1, and a plurality of strips 5 arranged in between first substrate 1 and second substrate 3, each strip 5 having one end thereof hingedly connected to second substrate 3. The assembly further comprises a first electrode 2 being spaced apart from strips 5 and configured for receiving an electrostatic charge for charging first electrode 2, and a second electrode 4 connected to strips 5 and configured for receiving an electrostatic charge for charging strips 5. First electrode 2 and second electrode 4 are configured as a network of electrically conducting wires arranged on second substrate 3.

Each strip 5 is configured to pivot relative to second substrate 3 under the influence of an electrostatic force that is generated by the electrostatic charges on strips 5 and first electrode 2, thereby changing the translucence of the assembly. Strips 5 each comprise a rigid slat part 6 and a hinge part 7 that enables rotating of slat part 6 about a rotational axis indicated by arrow A. It should be noted that a plurality of strips 5 is arranged in between the first and second bodies 1, 3 of which only one strip is shown.

The strip assembly can for instance be used to manufacture insulated glazing with integrated blinds. In this case, the translucence of the glazing can be adjusted in dependence of the voltage that is applied between the first and second electrodes. Depending on the arrangement of the electrodes and the strips, the insulated glazing can be configured to be in a substantially transparent state when no voltage is applied or in a substantiality opaque state when a voltage is applied, or vice versa. The skilled person readily understands that the amount of transparency or opacity can be chosen as desired.

When used in as insulated glazing with integrated blinds, it is necessary to attach the strips to the second substrate in such a way that the strips can freely rotate along an axis parallel to the longitudinal edge of the strip. Moreover, an electrical current must be able to flow from the second electrode to the strip. This functionality must be available under all operational conditions such as temperature, ambient pressure, UV-exposure, vibration, wind and snow loads over the complete lifecycle relevant for building structures. At the same time product quality, production yield, product equipment investments and product cost should be optimized for large scale production.

The applicant has found that at least some of these goals are not met with the known system. For example, the applicant has found that the switching behavior of the known strips requires relatively high voltages and may be unreliable for some orientations of the insulated glazing. Furthermore, the production costs associated with the known strip assembly are relatively high.

It is therefore an object of the invention to provide a more robust strip assembly that can be manufactured at relatively low costs.

According to the invention, this object is achieved with the strip assembly according to claim 1 that is characterized in that the first substrate comprises a first coating covering the first body and forming the first electrode.

The applicant has found that by using a first coating on the first body as the first electrode a more uniform and predictable switching behavior can be obtained at relatively low voltages. Using a coating further allows large scale manufacturing of the electrode thereby reducing costs. These advantageous effects can be improved still if a second coating, covering the second body, is used as the second electrode. In this case, the strips are connected to the second body via the second coating. The applicant has further found that existing low emissivity coatings (low-e coatings) can be used as the first and/or second electrode.

Generally, two different kinds of low-e coatings exist today. A first kind of low-e coating is fabricated using a chemical vapor deposition process, which is applied directly on the floatline to produce a transparent tin oxide layer. Such coating is referred to as a hard coating as it is covalently bonded to the glass. This coating is realized during the manufacturing of the glass bodies.

A second kind of low-e coating is fabricated using magnetron sputtered vacuum deposition to produce a transparent metallic coating on the glass body. Such coating is typically referred to as soft coating. This coating is realized after glass bodies have been manufactured.

Soft coatings differentiate from hard coatings in that they show a higher reflectivity for low wavelength infrared radiation, which is typically associated with sunlight. Both coatings show a high reflectivity for high wavelength infrared radiation, which is typically associated with a heated environment or objects. As such, hard coatings are used more often in relatively cold climates, where it is important to use the thermal energy from the Sun to heat up a home and to limit the thermal energy from inside the house to escape via radiation through the window.

Soft coatings are more often used in relatively warm climates, where it is important, in the summer time, to maintain cool temperatures inside the house by blocking the thermal radiation from the outside and the Sun. In the winter-time, the same insulated panel prevents the loss of thermal energy from inside the house to escape via radiation through the window.

The applicant has found that when the known strip assembly is applied in larger panels, the panels may slightly deform, e.g. bend, during use as a result of thermal or mechanical stress. The deformation of the first and/or second substrate under operational circumstances will cause the hinge line to bend, resulting in an obstructed hinge function or even in severe damage to the strip material. Secondly, the elongation in the longitudinal direction of the strip due to temperature may be different for the strip material and the material of the second substrate, e.g. glass, resulting in high shear forces that may ultimately result in the strip detaching from the second substrate.

To prevent or limit the strips from detaching from the second substrate, it is advantageous if each strip comprises a flexible hinge part and a substantially rigid slat part, wherein one end of the hinge part is fixedly connected to the slat part, and wherein an opposing end of the hinge part is fixedly connected to the second substrate. The hinge part may allow a substantially independent translation and rotation of the slat part relative to the second substrate. Additionally or alternatively, the hinge part may be configured to allow the slat part to position itself under the influence of the electrostatic force at substantially the same angle relative to the second substrate for different distances between the slat part and the second substrate.

It should be noted that the slat part should be rigid enough such that the slat part does not or at least not to a large extent deform during the motion of the strips as a result of the electrostatic force.

In this embodiment, the hinge part is configured in such a way that the slat part cannot only rotate relative to the second substrate but can also translate predominantly perpendicular to the second substrate. This is achieved by increasing the length of the hinge part instead of just making a hinge that can rotate. In this way, the varying distance between the second substrate and the longitudinal edge of the strip due to the deformation of the second substrate can be compensated. Also this increased length will prevent damage to the hinge part when subjected to elongation in the longitudinal direction of the strip due to temperature variations. Additionally, the translation of the strip perpendicular to the second substrate at the position of the highest deformation, e.g. in the middle of the second substrate, will result in a smaller increase of the distance between the strip edge and the first substrate having a positive effect on the electrostatic forces on the strip. The use of the hinge part further allows for a relatively straightforward and cost effective production assembly process as the hinge part does not have to be extremely flexible.

The hinge part may comprise a first region in which the hinge part is fixedly connected to the second substrate, a second region in which the hinge part is fixedly connected to the slat part, and an intermediate region that extends between the first and second region. Furthermore, the hinge part may be elongated in a first direction substantially in parallel to the first and second substrates, a length of the intermediate part in a direction perpendicular to the first direction being larger than two times the thickness of the intermediate part and being smaller than the length of the slat part in a direction perpendicular to the first direction.

The first region may comprise an adhesive configured to fixedly connect the first region of the hinge part and the second substrate together, wherein the second region comprises an adhesive configured to fixedly connect the second region of the hinge part and the slat part together, wherein the adhesive strength of the first and second region is substantially larger than the adhesive strength of the intermediate region. As an example, the intermediate region may be substantially free from adhesives. As an example, the hinge part may be formed using an adhesive tape having an elongated liner and two spaced apart and parallel adhesive regions provided on one side of the liner. These regions may form the first and second region of the hinge part when arranged on the second substrate and the slat part.

Alternatively, the first and second regions may each comprise an activated adhesive and wherein the non-adhesive region may comprise a non-activated adhesive. In a further embodiment, the first and second regions may each be substantially composed of the activated adhesive and the intermediate region may be substantially composed of the non-activated adhesive. Accordingly, the hinge part can be substantially formed by an adhesive without the need for further constructional components. By only using an adhesive, a relatively thin and flexible hinge part can be realized by which the abovementioned translation and rotation of the slat part can be accommodated. As an example, the first, second, and intermediate region may each comprise a hot melt adhesive. The invention does not exclude embodiments wherein different adhesives are used for the first, second, and intermediate region.

Using adhesives that can be activated after arranging them on the second substrate or the slat part offers the advantage that positioning of the adhesives in their non-activated state is less critical than using adhesives that display a high adhesive strength prior to arranging them on the second substrate or the slat part.

The first and/or second substrate may comprise a glass panel. Additionally or alternatively, a color and/or translucence or reflectivity of the strips is different from that of the first and/or second substrates. This allows the optical appearance or optical behavior to vary in dependence of the applied voltage to the first and second electrodes.

Without being bound by theory, the applicant stipulates that the deformation of the strip assembly, and more in particular the first and/or second substrate, increases the risk of an electric discharge during use of the strip assembly. This increased risk may for instance be related to a decreased gap between the top of the strips and the first electrode. Consequently, the electric field inside the gap may locally exceed the breakdown electrical field value that is relevant to the medium in between the strips and the first electrode, e.g. typically an inert gaseous medium such as Argon. In such cases, an electric discharge will occur in between the strips and the first electrode.

By using the different position of the first electrode, namely on top of the first body, in combination with an insulating layer covering said electrode, the electric discharge can be prevented from occurring, or the current that will flow during discharge between the strips and the first electrode can be limited to levels that will not or at least to a lesser extent result in permanent damage of the strips.

The skilled person will readily understand that the level of conductivity of the first and second electrodes, as well as the strips, should be sufficient to transfer charges within a desired time frame. Similarly, the isolating properties of the insulating layer should be sufficient to prevent damaging current flow in case an electric discharge occurs.

An electrical resistance of the strip is preferably less than 1000 MΩ per square, the electrical resistance of the first and/or second coating preferably less than 100MΩ per square, and the breakdown voltage of the insulating layer preferably exceeds 20kV.

The strip assembly may further comprise an airtight sealing arranged between the first and second substrate for creating an airtight space between the first and second substrate. This space can be filled with an inert gaseous medium.

The strip assembly may further comprise a high voltage source having a first terminal connected to the first electrode, and a second terminal connected to the second electrode, wherein the high voltage source is configured for generating a high voltage between the first and second terminal.

According to a further aspect, the invention provides a strip system comprising a plurality of strip assemblies as above, wherein the strip assemblies are arranged in a stacked manner. For example, the order of the first and second substrates of adjacently arranged strip assemblies is reversed so that adjacently arranged strip assemblies share either the first substrate or the second substrate. Such stacking allows a further control of the optical appearance or behavior.

According to another further aspect, the invention provides insulated glazing comprising the strip assembly or strip system as defined above, wherein the first and second body each comprise a glass panel. Other types of transparent materials, such as transparent plastics, are not excluded.

According to another further aspect, the invention provides a method for manufacturing a strip assembly as defined above, comprising:
providing the second translucent substrate;
arranging a plurality of slats on the second substrate, which slats are elongated in a first direction;
providing a flexible hinge part that is elongated in said first direction;
for each slat, fixedly positioning, preferably fixedly connecting, the hinge part with respect to the second translucent substrate and the slat, the hinge part thereby having a first region in which the hinge part is fixedly positioned, preferably fixedly connected, to the second substrate, a second region in which the hinge part is fixedly positioned, preferably fixedly connected, to the slat part, and an intermediate region that extends between the first and second region.

Providing a flexible hinge part may comprise arranging an adhesive to be activated over a longitudinal edge of the slat along the first direction, said adhesive covering an edge region of the slat, the adhesive thereby forming the second region of the hinge part, and said adhesive covering a region of the second substrate adjacent and parallel to the edge region, said region forming the first region and the intermediate region of the hinge part, and activating the adhesive only in the first and second regions of the hinge part. Furthermore, arranging the adhesive may comprise providing an adhesive layer covered by a liner, arranging the adhesive on the strip with the liner facing away from the strips, and removing the liner after activating the adhesive in the first and second regions. The adhesive may comprise a hot-melt, and activating the hot melt may comprise heating the adhesive using a light source, such as laser light, ultrasonic heating, or direct contact with a heat source.

Alternatively, providing a flexible hinge part may comprise providing an adhesive tape having two spaced apart adhesive regions that are elongated in the first direction, and, for each slat, arranging the adhesive tape on the slat to fixedly connect the slat to one adhesive region of the adhesive tape, and to fixedly connect the other adhesive region to the second substrate.

The method may further comprise providing the first translucent substrate, arranging the second substrate in a spaced apart manner from the first substrate so that the strips extend between the first and second substrates, and providing an airtight sealing between the first and second substrates.

Next, the invention will be described in more detail referring to the appended drawings wherein identical reference signs will be used to refer to identical or similar components, and wherein:
Figure 1 illustrates a known strip assembly;
Figure 2 illustrates an embodiment of a strip assembly in accordance with the present invention;
Figures 3 and 4 describe two different problem encountered when using the strip assembly of figure 1;
Figures 5A and 5B illustrate a further embodiment of a strip assembly in accordance with the present invention;
Figure 6 illustrates an embodiment of a strip system in accordance with the present invention;
Figures 7A- 7C illustrate a method for manufacturing the embodiment shown in figure 5A in accordance with the present invention; and
Figures 8A - 8B illustrate an embodiment of an insulated glass panel in accordance with the present invention.

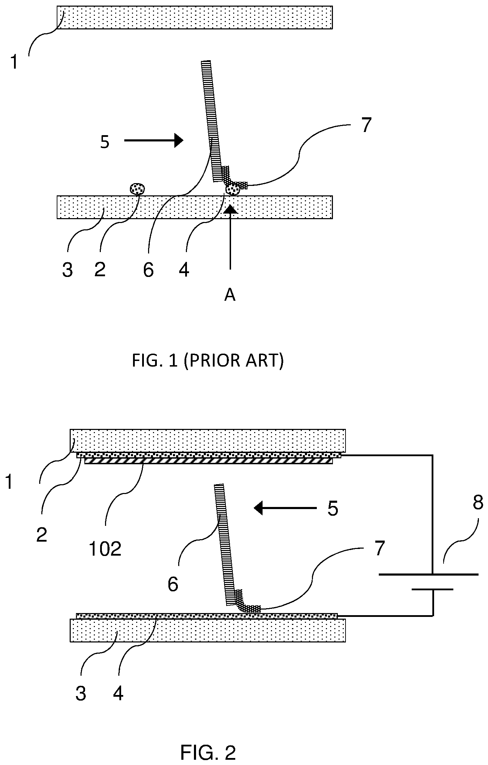

Figure 2 illustrates a strip assembly in accordance with the present invention. This embodiment differs from the embodiment in figure 1 in that the first electrode is formed as a first coating 2 on first body 1, and in that an insulating layer 102 is arranged on top of first coating 2. Also shown is a high voltage source 8 for charging slat part 6 via second electrode 4 and for charging first electrode 2.

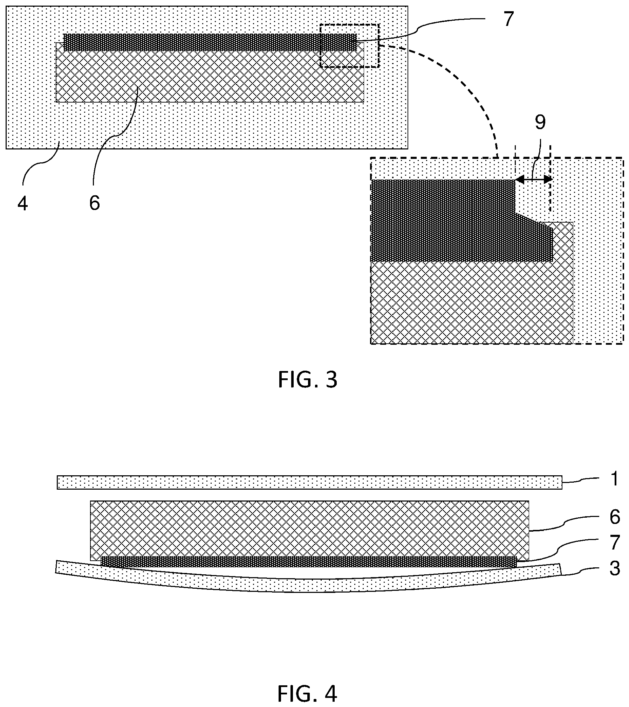

Figures 3 and 4 illustrate two problems encountered when using the strip assembly of figure 1. Figure 3 illustrates a top view of the second glass body covered by second coating 4. In figure 3, slat part 6 is lying on top of coating 4. This situation could correspond to an opaque state of the strip assembly.

Due to different temperature coefficients of slat part 6 and the second glass body, hinge part 7 will be highly stressed over a relatively short elongation distance 9, resulting in permanent damage.

The cross section of the strip assembly in figure 4 illustrates a different problem. Here, due to deformation of glass bodies 1, 3 under operational circumstances, hinge part 7 will be highly stressed and may get detached from second coating 4 (not illustrated). This may prevent proper operation of strips 5. For example, if coating 4 has a relatively low electrical conductivity, slat part 6 may not get uniformly charged.

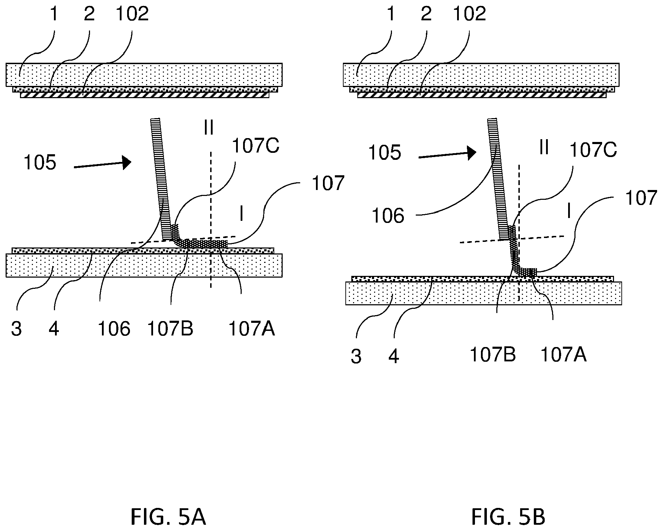

The problems illustrated in figures 3 and 4 may be overcome by the embodiment shown in figures 5A and 5B. Compared to the embodiment in figure 2, this embodiment has a different strip 105, which comprises a slat part 106 and a hinge part 107. In turn, hinge part 107 comprises a first region 107A in which hinge part 107 is fixedly connected to second coating 4, a second region 107C in which hinge part 107 is fixedly connected to slat part 106, and an intermediate part 107B arranged in between regions 107A, 107C. In figures 5A and 5B, lines I and II indicates the boundaries between these regions.

Hinge part 107 is made of a flexible material. This material allows slat part 106 to substantially independently translate and rotate relative to the second substrate. The effect of this motion can be observed by comparing figures 5A and 5B. In figure 5A, not only first region 107A lies against second coating 4, but also a part of intermediate region 107B. This situation is different in figure 5B, where intermediate region 107B extends towards the first substrate and only first region 107A lies against second coating 4.

As can be seen from the figures, slat part 106 is able to orient itself relative to the first and/or second substrate at a substantially identical angle although the distance between slat part 106 and the second substrate is different. As shown in figure 5B, by using intermediate region 107B, a larger distance between the first and second substrates, for instance due to the deformation shown in figure 4B, can be compensate for. The electrical behavior of strips 105, which is largely determined by the distance between slat part 106 and first coating 2, is substantially identical independent on the local distance between the first and second substrates.

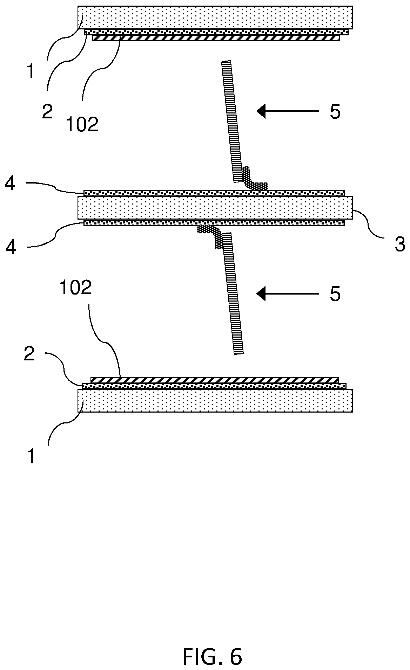

Figure 6 illustrates an embodiment of a strip system according to the invention. Here, two strip assemblies are used that share their second substrate. The slat parts of the upper and lower strip assembly can be controlled independently. The translucence and/or color of the slat parts for the different strip assemblies can be designed differently to enable more variations of the optical appearance of the strip system. Although figure 6 indicates that the slat parts of the different strip assemblies are arranged in line with each other, the present invention does not exclude embodiments wherein one slat part is shifted and/or rotated with respect to the other slat part.

Furthermore, figure 6 illustrates a strip system using the strip assembly of figure 2. It should be apparent that the embodiment of figure 5A can equally be used. It is even possible to combine the figure 2 and figure 5A embodiments in the strip system of figure 6.

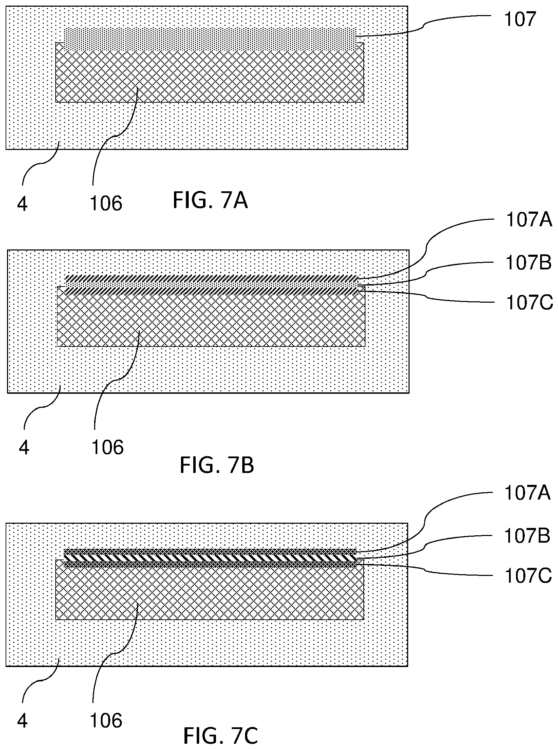

Figures 7A-7C illustrate a method for manufacturing a strip assembly in accordance with the present invention. As a first step, illustrated in figure 7A, a hot melt adhesive 107 is arranged on second substrate. More in particular, adhesive 107 is arranged both on second coating 4 and on slat part 106. To this end, adhesive 107 may on one side, i.e. the side directed away from the second substrate, be covered by a liner to facilitate handling, although such liner may be omitted depending on the manufacturing technology used.

Next, hot melt adhesive 107 is thermally activated by bringing a heat source into contact with those regions of the adhesive that will form the first and second regions 107A, 107C. In between these regions, i.e. in the intermediate region 107B, the adhesive is not activated. Other methods for activating the hot melt are not excluded.

As a last step, illustrated in figure 7C, the liner is removed leaving a hinge part that is fully formed by the hot melt adhesive. In this manner, a relatively thin and flexible intermediate region 107B can be formed. Such regions are well suited to enable the substantially independent translation and rotation of slat part 106.

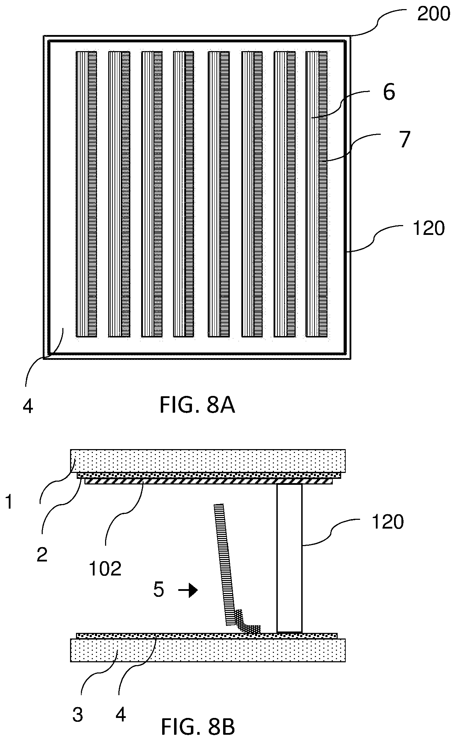

Figure 8A illustrates insulated glazing 200 comprising the strip assembly of figure 2 although the strip assembly of figure 5A can equally be used. The top view in figure 8A illustrates that a plurality of elongated slat parts 6 is arranged on second coating 4 of the second substrate. Slat parts 6 are connected to second coating 4 using hinge parts 7. Shown in figure 8A is the state in which slat parts 6 lie against the second substrate. Typically, this state corresponds to the state in which no or a small voltage is applied in between the first and second coatings.

Figure 8B illustrates insulated glazing 200 near the edge of the panel in figure 8A. As can be seen, an airtight sealing 120 is arranged between the first and second substrates. Moreover, the space between the first and second substrates may be filled with an inert gaseous medium.

The applicant has found that existing low emissivity coatings used in known double glazing or insulated glazing has sufficient electrical conductivity to allow the strips and the first electrode to get properly charged within an acceptable time. Examples of such coatings are sputtered coatings or pyrolytic coatings having a thickness ranging from 10 to 400 nanometers.

Typically, the first and second bodies each comprise a single or laminated glass panel having a thickness in the range of 2-20 mm and having a length and width that may exceed 4000 mm. These panels are separated by a distance that generally lies within the range of 10-40 mm.

The slat part is typically made from a sheet of a material chosen from the group consisting of lightweight metals, thermoplastics, paper or textiles. The slat parts may have a thickness of about 10-200 micrometer and may have a width roughly between 5 and 50 mm. The length of the strips is typically slightly less than the width or length of the glass panel to accommodate the airtight sealing.

Exemplary materials to be used for hinge parts are polyester, polyolefins, polyamide, or polyurethane having a thickness of 5 up to 100 micrometers. When an adhesive that needs to be activated is used, a thermoplastic polymer can for instance be used. The invention is not limited to any particular manner by which an adhesive can be activated. This could for instance also be performed without direct contact between the source of activation and the adhesive. For example, infrared radiation may be used to thermally activate the adhesive.

The insulating layer can be a layer made from any of the materials from the group consisting of plastic foils, glass or paper.

The skilled person understands that the properties indicated above represent possible design choices for materials and physical dimensions depending on a given target application. These design choices do not limit the scope of the present invention unless indicated.

It should be appreciated by the skilled person that although the present invention has been described using detailed embodiments thereof, the invention is not limited to these embodiments but various modifications can be implemented without departing from the scope of the invention which is defined by the appended claims.

## Claims

1. A strip assembly, comprising:
a first translucent substrate comprising a first body (1);
a second translucent substrate comprising a second body (3) and arranged spaced apart from the first substrate;
a plurality of strips (5) arranged in between the first and second substrate, each strip having one end thereof hingedly connected to the second substrate;
a first electrode (2)being spaced apart from the strips (5) and configured for receiving an electrostatic charge for charging the first electrode (2);
a second electrode (4) connected to the strips (5) and configured for receiving an electrostatic charge for charging the strips (5);
wherein each strip is configured to pivot relative to the second substrate under the influence of an electrostatic force that is generated by the electrostatic charges on the strips (5) and the first electrode (2), thereby changing the translucence and/or color of the assembly;
**characterized in that**
the first substrate comprises a first coating (2) covering said first body and forming said first electrode (2).

2. The strip assembly according to claim 1, wherein the second substrate further comprises a second coating covering the second body (3), wherein the strips (5) are connected to the second body (3) via the second coating, said second coating forming the second electrode (4).

3. The strip assembly according to claim 1 or 2, wherein the first and/or second coating comprises a low emissivity coating.

4. The strip assembly according to any of the previous claims, wherein each strip comprises a flexible hinge part (7) and a substantially rigid slat part (6), wherein one end of the hinge part (7) is fixedly connected to the slat part (6), and wherein an opposing end of the hinge part (7) is fixedly connected to the second substrate, said hinge part (7) allowing a substantially independent translation and rotation of the slat part (6) relative to the second substrate;
said hinge part (7) being preferably configured to allow the slat part (6) to position itself under the influence of said electrostatic force at substantially the same angle relative to the second substrate for different distances between the slat part (6) and said second substrate.

5. The strip assembly according to claim 4, wherein the hinge part (107) comprises a first region (107A) in which the hinge part (107) is fixedly positioned, preferably fixedly connected, to the second substrate, a second region (107C) in which the hinge part (107) is fixedly positioned, preferably fixedly connected, to the slat part (106), and an intermediate region (107B) that extends between the first and second region (107A, 107C);
wherein the hinge part (107) is preferably elongated in a first direction substantially in parallel to the first and second substrates, a length of the intermediate part in a direction perpendicular to the first direction being larger than two times the thickness of the intermediate part and being smaller than the length of the slat part (106) in a direction perpendicular to the first direction.

6. The strip assembly according to claim 5, wherein the first region (107A) comprises an adhesive configured to fixedly connect the first region (107A) of the hinge part (107) and the second substrate together, wherein the second region (107C) comprises an adhesive configured to fixedly connect the second region (107C) of the hinge part (107) and the slat part (106) together, wherein the adhesive strength of the first and second region (107C) is substantially larger than the adhesive strength of the intermediate region (107B);
wherein the intermediate region (107B) is preferably substantially free from adhesives or wherein the first and second regions (107A, 107C) each preferably comprise an activated adhesive and wherein the non-adhesive region comprises a non-activated adhesive.

7. The strip assembly according to claim 6, wherein the first and second regions (107A, 107C) are each substantially composed of said activated adhesive and wherein the intermediate region (107B) is substantially composed of said non-activated adhesive, and/or wherein the first, second, and intermediate region (107B) each comprise a hot melt adhesive.

8. The strip assembly according to any of the previous claims, wherein the first and/or second substrate comprises a glass panel, and/or wherein a color and/or translucence or reflectivity of the strips (5) is different from that of the first and/or second substrates, and/or wherein an electrical resistance of the strip is less than 1000 MΩ per square, the electrical resistance of the first and/or second coating is less than 100MΩ per square, and/or the breakdown voltage of the insulating layer exceeds 20kV.

9. The strip assembly according to any of the previous claims, further comprising:
an airtight sealing arranged between the first and second substrate for creating a substantially airtight space between the first and second substrate, said space being preferably filled with an inert gaseous medium; and/or
a high voltage source (8) having a first terminal connected to the first electrode (2), and a second terminal connected to the second electrode (4), said high voltage source (8) being configured for generating a high voltage between the first and second terminal.

10. A strip system, comprising a plurality of strip assemblies as defined in any of the previous claims, wherein the strip assemblies are arranged in a stacked manner;
wherein the order of the first and second substrate of adjacently arranged strip assemblies is preferably reversed so that adjacently arranged strip assemblies share either the first substrate or the second substrate.

11. Insulated glazing comprising the strip assembly according to any of the claims 1-9 or the strip system according to claim 10, wherein the first and second body each comprise a glass panel.

12. A method for manufacturing the strip assembly of any of the claims 4-7, comprising:
providing the second translucent substrate;
arranging a plurality of slats on the second substrate, which slats are elongated in a first direction;
providing a flexible hinge part (107) that is elongated in said first direction;
for each slat, fixedly positioning, preferably fixedly connecting, the hinge part (107) with respect to the second translucent substrate and the slat, the hinge part (107) thereby having a first region (107A) in which the hinge part (107) is fixedly positioned, preferably fixedly connected, to the second substrate, a second region (107C) in which the hinge part (107) is fixedly positioned, preferably fixedly connected, to the slat part (106), and an intermediate region (107B) that extends between the first and second region (107A, 107C).

13. The method according to claim 12, wherein said providing a flexible hinge part (107) comprises:
arranging an adhesive to be activated over a longitudinal edge of the slat along the first direction, said adhesive covering:
an edge region of the slat, the adhesive thereby forming the second region (107C) of the hinge part (107), and said adhesive covering a region of the second substrate adjacent and parallel to the edge region, said region forming the first region (107A) and the intermediate region (107B) of the hinge part (107);
activating the adhesive only in the first and second regions (107A, 107C) of the hinge part (107);
wherein arranging the adhesive preferably comprises:
providing an adhesive layer covered by a liner; arranging the adhesive on the strip with the liner facing away from the strips (5);
removing the liner after activating the adhesive in the first and second regions (107A, 107C); and/or
wherein the adhesive preferably comprises a hot-melt, and wherein the activating the hot melt comprises heating the adhesive using a light source, such as laser light, ultrasonic heating, or direct contact with a heat source.

14. The method according to claim 12, wherein said providing a flexible hinge part (107) comprises:
providing an adhesive tape having two spaced apart adhesive regions that are elongated in the first direction;
for each slat, arranging the adhesive tape on the slat to fixedly connect the slat to one adhesive region of the adhesive tape, and to fixedly connect the other adhesive region to the second substrate.

15. The method according to any of the claims 12-14, further comprising:
providing the first translucent substrate;
arranging the second substrate in a spaced apart manner from the first substrate so that the strips (5) extend between the first and second substrates; and
providing an airtight sealing between the first and second substrates.

## Patentansprüche

1. Streifenanordnung umfassend:
ein erstes lichtdurchlässiges Substrat, das einen ersten Körper (1) umfasst;
ein zweites lichtdurchlässiges Substrat, das einen zweiten Körper (3) umfasst und von dem ersten Substrat beabstandet angeordnet ist;
eine Mehrzahl von Streifen (5), die zwischen dem ersten und zweiten Substrat angeordnet sind, wobei jeder Streifen mit einem Ende mit dem zweiten Substrat gelenkig verbunden ist;
eine erste Elektrode (2), die von den Streifen (5) beabstandet ist und zur Aufnahme einer elektrostatischen Ladung zum Laden der ersten Elektrode (2) ausgebildet ist;
eine zweite Elektrode (4), die mit den Streifen (5) verbunden ist und zur Aufnahme einer elektrostatischen Ladung zum Laden der Streifen (5) ausgebildet ist;
wobei jeder Streifen dazu ausgebildet ist, bezogen auf das zweite Substrat unter dem Einfluss einer elektrostatischen Kraft zu schwenken, die durch die elektrostatischen Ladungen auf den Streifen (5) und der ersten Elektrode (2) erzeugt wird, wodurch die Lichtdurchlässigkeit und/oder Farbe der Anordnung verändert wird;
**dadurch gekennzeichnet, dass**
das erste Substrat eine erste Beschichtung (2) umfasst, die den ersten Körper bedeckt und die erste Elektrode (2) bildet.

2. Streifenanordnung nach Anspruch 1, wobei das zweite Substrat ferner eine zweite Beschichtung umfasst, die den zweiten Körper (3) bedeckt, wobei die Streifen (5) über die zweite Beschichtung mit dem zweiten Körper (3) verbunden sind, wobei die zweite Beschichtung die zweite Elektrode (4) bildet.

3. Streifenanordnung nach Anspruch 1 oder 2, wobei die erste und/oder zweite Beschichtung eine Beschichtung mit niedrigem Emissionsvermögen umfasst.

4. Streifenanordnung nach einem der vorhergehenden Ansprüche, wobei jeder Streifen einen flexiblen Scharnierteil (7) und einen im Wesentlichen steifen Stabteil (6) umfasst, wobei ein Ende des Scharnierteils (7) mit dem Stabteil (6) fest verbunden ist und wobei ein gegenüberliegendes Ende des Scharnierteils (7) mit dem zweiten Substrat fest verbunden ist, wobei der Scharnierteil (7) eine im Wesentlichen unabhängige Translation und Rotation des Stabteils (6) bezogen auf das zweite Substrat erlaubt;
wobei der Scharnierteil (7) vorzugsweise dazu ausgebildet ist, es dem Stabteil (6) zu erlauben, sich unter dem Einfluss der elektrostatischen Kraft im Wesentlichen in demselben Winkel bezogen auf das zweite Substrat für verschiedene Abstände zwischen dem Stabteil (6) und dem zweiten Substrat zu positionieren.

5. Streifenanordnung nach Anspruch 4, wobei der Scharnierteil (107) einen ersten Bereich (107A), in welchem das Scharnierteil (107) fest positioniert, vorzugsweise fest mit dem zweiten Substrat verbunden ist, einen zweiten Bereich (107C), in welchem das Scharnierteil (107) fest positioniert, vorzugsweise fest mit dem Stabteil (106) verbunden ist, und einen Zwischenbereich (107B), der sich zwischen dem ersten und zweiten Bereich (107A, 107C) erstreckt, umfasst;
wobei der Scharnierteil (107) vorzugsweise in einer ersten Richtung im Wesentlichen parallel zum ersten und zweiten Substrat langgestreckt ist, wobei eine Länge des Zwischenteils in einer Richtung senkrecht zu der ersten Richtung größer als das Zweifache der Dicke des Zwischenteils und kleiner als die Länge des Stabteils (106) in einer Richtung senkrecht zu der ersten Richtung ist.

6. Streifenanordnung nach Anspruch 5, wobei der erste Bereich (107A) ein Haftmittel umfasst, das dazu ausgebildet ist, den ersten Bereich (107A) des Scharnierteils (107) und das zweite Substrat zusammen fest zu verbinden, wobei der zweite Bereich (107C) ein Haftmittel umfasst, das dazu ausgebildet ist, den zweiten Bereich (107C) des Scharnierteils (107) und den Stabteil (106) zusammen fest zu verbinden, wobei die Haftstärke des ersten und zweiten Bereichs (107C) im Wesentlichen größer als die Haftstärke des Zwischenbereichs (107B) ist;
wobei der Zwischenbereich (107B) vorzugsweise im Wesentlichen frei von Haftmitteln ist, oder wobei der erste und zweite Bereich (107A, 107C) jeweils vorzugsweise ein aktiviertes Haftmittel umfassen, und wobei der nicht-haftende Bereich ein nicht-aktiviertes Haftmittel umfasst.

7. Streifenanordnung nach Anspruch 6, wobei der erste und zweite Bereich (107A, 107C) jeweils im Wesentlichen aus dem aktivierten Haftmittel zusammengesetzt sind, und wobei der Zwischenbereich (107B) im Wesentlichen aus dem nicht-aktivierten Haftmittel zusammengesetzt ist, und/oder wobei der erste, zweite und der Zwischenbereich (107B) jeweils einen Heißkleber umfassen.

8. Streifenanordnung nach einem der vorhergehenden Ansprüche, wobei das erste und/oder zweite Substrat eine Glasscheibe umfasst, und/oder wobei eine Farbe und/oder Lichtdurchlässigkeit oder ein Reflexionsvermögen der Streifen (5) von jener/jenem des ersten und/oder zweiten Substrats verschieden ist, und/oder wobei ein elektrischer Widerstand des Streifens weniger als 1000 MΩ pro Flächenquadrat beträgt, der elektrische Widerstand der ersten und/oder zweiten Beschichtung weniger als 100 MΩ pro Flächenquadrat beträgt und/oder die Durchschlagspannung der Isolationsschicht 20 kV übersteigt.

9. Streifenanordnung nach einem der vorhergehenden Ansprüche, ferner umfassend:
eine luftdichte Dichtung, die zur Erzeugung eines im Wesentlichen luftdichten Raums zwischen dem ersten und zweiten Substrat zwischen dem ersten und zweiten Substrat angeordnet ist, wobei der Raum vorzugsweise mit einem inerten gasförmigen Medium gefüllt ist; und/oder
eine Hochspannungsquelle (8) mit einem ersten Anschluss, der mit der ersten Elektrode (2) verbunden ist, und einem zweiten Anschluss, der mit der zweiten Elektrode (4) verbunden ist, wobei die Hochspannungsquelle (8) zur Erzeugung einer Hochspannung zwischen dem ersten und zweiten Anschluss ausgebildet ist.

10. Streifensystem umfassend eine Mehrzahl von Streifenanordnungen nach einem der vorhergehenden Ansprüche, wobei die Streifenanordnungen gestapelt angeordnet sind;
wobei die Reihenfolge des ersten und zweiten Substrats benachbart angeordneter Streifenanordnungen vorzugsweise umgekehrt ist, so dass benachbart angeordnete Streifenanordnungen entweder das erste oder das zweite Substrat gemeinsam nutzen.

11. Isolierglas umfassend die Streifenanordnung nach einem der Ansprüche 1 bis 9 oder das Streifensystem nach Anspruch 10, wobei der erste und zweite Körper jeweils eine Glasscheibe umfassen.

12. Verfahren zur Herstellung der Streifenanordnung nach einem der Ansprüche 4 bis 7, umfassend:
Bereitstellen des zweiten lichtdurchlässigen Substrats;
Anordnen einer Mehrzahl von Stäben auf dem zweiten Substrat, wobei die Stäbe in einer ersten Richtung langgestreckt sind;
Bereitstellen eines flexiblen Scharnierteils (107), der in der ersten Richtung langgestreckt ist;
für jeden Stab, festes Positionieren, vorzugsweise festes Verbinden des Scharnierteils (107) in Bezug auf das zweite lichtdurchlässige Substrat und den Stab, wobei der Scharnierteil (107) dadurch einen ersten Bereich (107A), in welchem der Scharnierteil (107) fest positioniert, vorzugsweise fest mit dem zweiten Substrat verbunden ist, einen zweiten Bereich (107C), in welchem der Scharnierteil (107) fest positioniert, vorzugsweise fest mit dem Stabteil (106) verbunden ist, und einen Zwischenbereich (107B), der sich zwischen dem ersten und zweiten Bereich (107A, 107C) erstreckt, aufweist.

13. Verfahren nach Anspruch 12, wobei das Bereitstellen eines flexiblen Scharnierteils (107) Folgendes umfasst:
Anordnen eines zu aktivierenden Haftmittels über einer Längskante des Stabs entlang der ersten Richtung, wobei das Haftmittel Folgendes bedeckt:
einen Kantenbereich des Stabs, wobei das Haftmittel dadurch den zweiten Bereich (107C) des Scharnierteils (107) bildet, und das Haftmittel einen Bereich des zweiten Substrats bedeckt, der dem Kantenbereich benachbart und parallel dazu ist, wobei der Bereich den ersten Bereich (107A) und den Zwischenbereich (107B) des Scharnierteils (107) bildet;
Aktivieren des Haftmittels nur im ersten und zweiten Bereich (107A, 107C) des Scharnierteils (107);
wobei Anordnen des Haftmittels vorzugsweise Folgendes umfasst:
Bereitstellen einer Haftschicht, die von einer Decklage bedeckt ist;
Anordnen des Haftmittels auf dem Streifen, wobei die Decklage den Streifen (5) abgewandt ist;
Entfernen der Decklage nach Aktivierung des Haftmittels im ersten und zweiten Bereich (107A, 107C); und/oder
wobei das Haftmittel vorzugsweise einen Heißkleber umfasst, und wobei das Aktivieren des Heißklebers Erhitzen des Haftmittels mithilfe einer Lichtquelle, wie beispielsweise Laserlicht, Ultraschallerwärmen oder direkten Kontakts mit einer Wärmequelle umfasst.

14. Verfahren nach Anspruch 12, wobei das Bereitstellen eines flexiblen Scharnierteils (107) Folgendes umfasst:
Bereitstellen eines Haftbands mit zwei voneinander beabstandeten Haftbereichen, die in der ersten Richtung langgestreckt sind;
für jeden Stab, Anordnen des Haftbands auf dem Stab, um den Stab fest mit einem Haftbereich des Haftbands zu verbinden, und um den anderen Haftbereich fest mit dem zweiten Substrat zu verbinden.

15. Verfahren nach einem der Ansprüche 12 bis 14, ferner umfassend:
Bereitstellen des ersten lichtdurchlässigen Substrats;
Anordnen des zweiten Substrats in einem Abstand zum ersten Substrat, so dass sich die Streifen (5) zwischen dem ersten und zweiten Substrat erstrecken; und
Bereitstellen einer luftdichten Dichtung zwischen dem ersten und zweiten Substrat.

## Revendications

1. Ensemble de bandes, comprenant :
un premier substrat translucide comprenant un premier corps (1) ;
un deuxième substrat translucide comprenant un deuxième corps (3) et agencé de manière à être espacé du premier substrat ;
une pluralité de bandes (5) agencées entre les premier et deuxième substrats, chaque bande ayant une extrémité de celle-ci reliée de manière articulée au deuxième substrat ;
une première électrode (2) étant espacée des bandes (5) et configurée pour recevoir une charge électrostatique pour charger la première électrode (2) ;
une deuxième électrode (4) reliée aux bandes (5) et configurée pour recevoir une charge électrostatique pour charger les bandes (5) ;
dans lequel chaque bande est configurée pour pivoter par rapport au deuxième substrat sous l'influence d'une force électrostatique qui est générée par les charges électrostatiques sur les bandes (5) et la première électrode (2), modifiant ainsi la translucidité et/ou la couleur de l'ensemble ;
**caractérisé en ce que**
le premier substrat comprend un premier revêtement (2) recouvrant ledit premier corps et formant ladite première électrode (2).

2. Ensemble de bandes selon la revendication 1, dans lequel le deuxième substrat comprend en outre un deuxième revêtement recouvrant le deuxième corps (3), où les bandes (5) sont reliées au deuxième corps (3) par le deuxième revêtement, ledit deuxième revêtement formant la deuxième électrode (4).

3. Ensemble de bandes selon la revendication 1 ou 2, dans lequel le premier et/ou le deuxième revêtement(s) comprend/comprennent un revêtement à faible émissivité.

4. Ensemble de bandes selon l'une des revendications précédentes, dans lequel chaque bande comprend une partie d'articulation flexible (7) et une partie de latte essentiellement rigide (6), où une extrémité de la partie d'articulation (7) est reliée de manière fixe à la partie de latte (6), et où une extrémité opposée de la partie d'articulation (7) est reliée de manière fixe au deuxième substrat, ladite partie d'articulation (7) permettant une translation et une rotation essentiellement indépendantes de la partie de latte (6) par rapport au deuxième substrat ;
ladite partie d'articulation (7) étant de préférence configurée pour permettre à la partie de latte (6) de se positionner sous l'influence de ladite force électrostatique à essentiellement le même angle par rapport au deuxième substrat pour différentes distances entre la partie de latte (6) et ledit deuxième substrat.

5. Ensemble de bandes selon la revendication 4, dans lequel la partie d'articulation (107) comprend une première région (107A) dans laquelle la partie d'articulation (107) est positionnée de manière fixe, de préférence reliée de manière fixe, au deuxième substrat, une deuxième région (107C) dans laquelle la partie d'articulation (107) est positionnée de manière fixe, de préférence reliée de manière fixe, à la partie de latte (106) et une région intermédiaire (107B) qui s'étend entre les première et deuxième régions (107A, 107C) ;
dans lequel la partie d'articulation (107) est de préférence allongée dans une première direction essentiellement parallèle aux premier et deuxième substrats, la longueur de la partie intermédiaire dans une direction perpendiculaire à la première direction étant supérieure à deux fois l'épaisseur de la partie intermédiaire et étant inférieure à la longueur de la partie de latte (106) dans une direction perpendiculaire à la première direction.

6. Ensemble de bandes selon la revendication 5, dans lequel la première région (107A) comprend un adhésif configuré pour relier de manière fixe la première région (107A) de la partie d'articulation (107) et le deuxième substrat ensemble, où la deuxième région (107C) comprend un adhésif configuré pour relier de manière fixe la deuxième région (107C) de la partie d'articulation (107) et la partie de latte (106) ensemble, où la force d'adhérence des première et deuxième régions (107C) est essentiellement supérieure à la force d'adhérence de la région intermédiaire (107B) ;
dans lequel la région intermédiaire (107B) est de préférence essentiellement exempte d'adhésifs ou dans lequel les première et deuxième régions (107A, 107C) comprennent chacune de préférence un adhésif activé et dans lequel la région non adhésive comprend un adhésif non activé.

7. Ensemble de bandes selon la revendication 6, dans lequel les première et deuxième régions (107A, 107C) sont chacune essentiellement composées dudit adhésif activé et dans lequel la région intermédiaire (107B) est essentiellement composée dudit adhésif non activé, et/ou dans lequel la première région, la deuxième région et la région intermédiaire (107B) comprennent chacune un adhésif thermofusible.

8. Ensemble de bandes selon l'une des revendications précédentes, dans lequel le premier et/ou le deuxième substrat(s) comprend/comprennent un panneau de verre, et/ou dans lequel une couleur et/ou une translucidité ou réflectivité des bandes (5) est/sont différente(s) de celle(s) du premier et/ou du deuxième substrat(s), et/ou dans lequel une résistance électrique de la bande est inférieure à 1000 MΩ par carré, la résistance électrique du premier et/ou du deuxième revêtement(s) est inférieure à 100MΩ par carré, et/ou la tension de claquage de la couche isolante dépasse 20 kV.

9. Ensemble de bandes selon l'une des revendications précédentes, comprenant en outre :
un joint étanche à l'air agencé entre les premier et deuxième substrats pour créer un espace essentiellement étanche à l'air entre les premier et deuxième substrats, ledit espace étant de préférence rempli d'un milieu gazeux inerte ; et/ou
une source haute tension (8) ayant une première borne reliée à la première électrode (2) et une deuxième borne reliée à la deuxième électrode (4), ladite source haute tension (8) étant configurée pour générer une haute tension entre les première et deuxième bornes.

10. Système de bande, comprenant une pluralité d'ensembles de bandes tels que définis dans l'une des revendications précédentes, dans lequel les ensembles de bandes sont agencés de manière empilée ;
dans lequel l'ordre des premier et deuxième substrats d'ensembles de bandes agencés de manière adjacente est de préférence inversé de sorte que les ensembles de bandes agencés de manière adjacente partagent soit le premier substrat soit le deuxième substrat.

11. Vitrage isolé comprenant l'ensemble de bandes selon l'une des revendications 1 à 9 ou le système de bande selon la revendication 10, dans lequel les premier et deuxième corps comprennent chacun un panneau de verre.

12. Procédé de fabrication de l'ensemble de bandes de l'une des revendications 4 à 7, comprenant le fait :
de fournir le deuxième substrat translucide ;
d'agencer une pluralité de lattes sur le deuxième substrat, lesquelles lattes sont allongées dans une première direction ;
de fournir une partie d'articulation flexible (107) qui est allongée dans ladite première direction ;
pour chaque latte, de positionner de manière fixe, de préférence relier de manière fixe, la partie d'articulation (107) par rapport au deuxième substrat translucide et à la latte, la partie d'articulation (107) ayant ainsi une première région (107A) dans laquelle la partie d'articulation (107) est positionnée de manière fixe, de préférence reliée de manière fixe, au deuxième substrat, une deuxième région (107C) dans laquelle la partie d'articulation (107) est positionnée de manière fixe, de préférence reliée de manière fixe, à la partie de latte (106), et une région intermédiaire (107B) qui s'étend entre les première et deuxième régions (107A, 107C).

13. Procédé selon la revendication 12, dans lequel ladite fourniture d'une partie d'articulation flexible (107) comprend le fait :
d'agencer un adhésif à activer sur un bord longitudinal de la latte le long de la première direction, ledit adhésif recouvrant :
une région de bord de la latte, l'adhésif formant ainsi la deuxième région (107C) de la partie d'articulation (107), et ledit adhésif recouvrant une région du deuxième substrat adjacente et parallèle à la région de bord, ladite région formant la première région (107A) et la région intermédiaire (107B) de la partie d'articulation (107) ;
d'activer l'adhésif uniquement dans les première et deuxième régions (107A, 107C) de la partie d'articulation (107) ;
dans lequel l'agencement de l'adhésif comprend de préférence le fait :
de fournir une couche adhésive recouverte d'une doublure ;
d'agencer l'adhésif sur la bande avec la doublure tournée à l'opposé des bandes (5) ;
de retirer la doublure après l'activation de l'adhésif dans les première et deuxième régions (107A, 107C) ; et/ou
dans lequel l'adhésif comprend de préférence une matière thermofusible, et dans lequel l'activation de la matière thermofusible comprend le chauffage de l'adhésif en utilisant une source de lumière, telle qu'une lumière laser, un chauffage par ultrasons ou un contact direct avec une source de chaleur.

14. Procédé selon la revendication 12, dans lequel ladite fourniture d'une partie d'articulation flexible (107) comprend le fait :
de fournir un ruban adhésif ayant deux régions adhésives espacées qui sont allongées dans la première direction ;
pour chaque latte, d'agencer le ruban adhésif sur la latte pour relier de manière fixe la latte à une région adhésive du ruban adhésif, et pour relier de manière fixe l'autre région adhésive au deuxième substrat.

15. Procédé selon l'une des revendications 12 à 14, comprenant en outre le fait :
de fournir le premier substrat translucide ;
d'agencer le deuxième substrat de manière espacée du premier substrat de sorte que les bandes (5) s'étendent entre les premier et deuxième substrats ; et
de fournir un joint étanche à l'air entre les premier et deuxième substrats.
